# EUROPÄISCHE PATENTANMELDUNG

(11) **EP 4 201 742 A1**
(43) Veröffentlichungstag der Anmeldung: **28.06.2023**
(21) Anmeldenummer: 21217499.9
(22) Anmeldetag: 23.12.2021
(51) Int. Cl.: B60Q 1/068, B60Q 1/076

(54) **VERSTELLVORRICHTUNG FÜR EINEN KRAFTFAHRZEUGSCHEINWERFER**

(71) Anmelder: ZKW Group GmbH, 3250 Wieselburg (AT)
(72) Erfinder: Steinkellner, Johann, 3684 St. Oswald (AT); Ederer, Lukas, 3382 Loosdorf (AT); Dallinger, Martin, 3654 Raxendorf (AT)
(74) Vertreter: Patentanwaltskanzlei Matschnig & Forsthuber OG

(57) **Zusammenfassung**

Verstellvorrichtung (10) für einen Kraftfahrzeugscheinwerfer zum gleichzeitigen Verstellen von einer ersten und einer zweiten optisch relevanten Baueinheit (100, 200) des Kraftfahrzeugscheinwerfers, wobei die optisch relevanten Baueinheiten (100, 200) Einstelldreiecke aufweisen, welche zueinander horizontal und vertikal gespiegelt sind, wobei die verschwenkbare Lagerung der ersten und zweiten optisch relevanten Baueinheit (100, 200) durch eine mechanische Kopplung miteinander mechanisch gekoppelt ist, sodass zu jedem Zeitpunkt die räumliche Orientierung der optisch relevanten Baueinheit aufrecht ist, wobei die mechanische Kopplung Folgendes umfasst:
- ein erstes Wippelement (400) mit einem ersten und zweiten Ende (410, 420), welche beim Verschwenken des ersten Wippelements (400) um eine erste Drehachse (DA1) eine gegengleiche Bewegung ausführen, und
- ein zweites Wippelement (500) mit einem ersten und zweiten Ende (510, 520), welche beim Verschwenken des zweiten Wippelements (500) um eine zweite Drehachse (DA2) eine gegengleiche Bewegung ausführen.

## Beschreibung

Die Erfindung betrifft eine Verstellvorrichtung für einen Kraftfahrzeugscheinwerfer zum gleichzeitigen Verstellen von einer ersten und einer zweiten optisch relevanten Baueinheit des Kraftfahrzeugscheinwerfers, wobei
- die erste optisch relevante Baueinheit an einem ersten Fixlagerpunkt um eine erste Horizontalachse und eine erste Vertikalachse verschwenkbar gelagert ist,
- die zweite optisch relevante Baueinheit an einem zweiten Fixlagerpunkt um eine zweite Horizontalachse und eine zweite Vertikalachse verschwenkbar gelagert ist,

wobei jede optisch relevante Baueinheit einen vertikalen und einen horizontalen Verstellpunkt aufweist, wobei die Verstellpunkte derart an den jeweiligen optisch relevanten Baueinheiten angeordnet sind, dass virtuelle Verbindungslinien zwischen den Verstellpunkten und dem jeweiligen Fixlagerpunkt ein Einstelldreieck bilden, wobei die virtuelle Verbindungslinie zwischen dem vertikalen Verstellpunkt und dem jeweiligen Fixlagerpunkt die Vertikalachse bildet, und wobei die virtuelle Verbindungslinie zwischen dem horizontalen Verstellpunkt und dem jeweiligen Fixlagerpunkt die Horizontalachse bildet,
wobei ausgehend von im ersten Fixlagerpunkt angelegten kartesischen Koordinatensystem, der horizontale Verstellpunkt der ersten optisch relevanten Baueinheit derart gelegen ist, dass der horizontale Verstellpunkt einen positiven y-Wert aufweist, wobei der vertikale Verstellpunkt der ersten optisch relevanten Baueinheit derart gelegen ist, dass der vertikale Verstellpunkt einen positiven z-Wert aufweist,
und wobei ausgehend von im zweiten Fixlagerpunkt angelegten kartesischen Koordinatensystem, der horizontale Verstellpunkt der zweiten optisch relevanten Baueinheit derart gelegen ist, dass der horizontale Verstellpunkt einen negativen y-Wert aufweist, wobei der vertikale Verstellpunkt der zweiten optisch relevanten Baueinheit derart gelegen ist, dass der vertikale Verstellpunkt einen negativen z-Wert aufweist,
wobei die verschwenkbare Lagerung der ersten und zweiten optisch relevanten Baueinheit durch eine mechanische Kopplung miteinander mechanisch gekoppelt ist, sodass zu jedem Zeitpunkt die erste und die zweite Horizontalachse zueinander parallel angeordnet sind, und die erste und die zweite Vertikalachse parallel zueinander angeordnet sind,
wobei die Verstellvorrichtung einen Halter zum Halten der optisch relevanten Baueinheiten umfasst, welche optisch relevanten Baueinheiten gelenkig mittels der jeweiligen Fixpunkte an dem Halter gelagert sind.

Weiters betrifft die Erfindung einen Kraftfahrzeugscheinwerfer umfassend zumindest eine erfindungsgemäße Verstellvorrichtung.

Jedes Lichtmodul, welches in einem Kraftfahrzeugscheinwerfer eingebaut ist, muss grundsätzlich einstellbar gelagert werden, um Toleranzen als auch Fahrzeugneigungen ausgleichen und das Beleuchtungsbild unterschiedlichen Fahrsituationen anpassen zu können. Hierbei bedient man sich zur statischen Einstellung vertikaler und horizontaler Einstelleinheiten.

Für einen dynamischen Ausgleich der Fahrzeugneigung kommt in der Regel ein Leuchtweitenregler zum Einsatz. Um Einstellpunkte abzubilden, wird das Modul meist auf einem Tragerahmen befestigt, wobei das durch die Einstellpunkte gebildete Einstelldreieck ein rechtwinkeliges Dreieck ist.

Allerdings bestehen die Verstellsysteme aus dem Stand der Technik zumeist aus vielen Einzelbauteilen und sind kompliziert aufgebaut, wodurch einerseits ein Einbauen in den Kraftfahrzeugscheinwerfer erschwert als auch viel Zeit benötigt wird. Ferner beanspruchen Verstellsysteme aus dem Stand der Technik sehr viel Bau- und Verschwenkraum innerhalb des Kraftfahrzeugscheinwerfers, was die Designmöglichkeiten erheblich einschränkt.

Es ist daher eine Aufgabe der Erfindung eine verbesserte Verstellvorrichtung bereitzustellen.

Diese Aufgabe wird dadurch gelöst, dass die mechanische Kopplung Folgendes umfasst:
- ein erstes Wippelement, welches eine Wippachse und ein erstes und zweites Ende umfasst, welche gegenüberliegend zueinander entlang der Wippachse an dem ersten Wippelement angeordnet sind, wobei das erste Wippelement verschwenkbar an dem Halter mittels einem ersten Drehlagerpunkt gelagert ist, welcher zwischen dem ersten und zweiten Ende an dem ersten Wippelement angeordnet ist, sodass das erste und das zweite Ende verschwenkbar um eine erste Drehachse sind, welche erste Drehachse in dem ersten Drehlagerpunkt liegt, wobei das erste und das zweite Ende beim Verschwenken um die erste Drehachse eine gegengleiche Bewegung ausführen,
   wobei das erste Ende des ersten Wippelements an dem vertikalen Verstellpunkt der ersten optisch relevanten Baueinheit und dem vertikalen Verstellpunkt der zweiten optisch relevanten Baueinheit angreift, sodass ein vertikales Verschwenken der ersten optisch relevanten Baueinheit um deren Horizontalachse ein gleichzeitiges vertikales Verschwenken der zweiten optisch relevanten Baueinheit um deren Horizontalachse - und umgekehrt - unter Beibehaltung der gleichen räumlichen Orientierung der optisch relevanten Baueinheiten zueinander bewirkt, wobei die vertikalen Verstellpunkte der optisch relevanten Baueinheiten dabei eine im Wesentlichen gegengleiche Bewegung ausführen, sodass zu jedem Zeitpunkt die erste und die zweite Horizontalachse zueinander parallel angeordnet sind, und die erste und die zweite Vertikalachse parallel zueinander angeordnet sind,
- ein zweites Wippelement, welches eine Wippachse und ein erstes und zweites Ende umfasst, welche gegenüberliegend zueinander entlang der Wippachse an dem zweiten Wippelement angeordnet sind, wobei das zweite Wippelement verschwenkbar an dem Halter mittels einem zweiten Drehlagerpunkt gelagert ist, welcher zwischen dem ersten und zweiten Ende an dem zweiten Wippelement angeordnet ist, sodass das erste und das zweite Ende verschwenkbar um eine zweite Drehachse sind, welche zweite Drehachse in dem zweiten Drehlagerpunkt liegt, wobei das erste und das zweite Ende beim Verschwenken um die zweite Drehachse eine gegengleiche Bewegung ausführen,
wobei das erste Ende des zweiten Wippelements an dem horizontalen Verstellpunkt der ersten optisch relevanten Baueinheit und dem horizontalen Verstellpunkt der zweiten optisch relevanten Baueinheit angreift, sodass ein horizontales Verschwenken der ersten optisch relevanten Baueinheiten um deren Vertikalachse ein gleichzeitiges horizontales Verschwenken der zweiten optisch relevanten Baueinheit um deren Vertikalachse - und umgekehrt - unter Beibehaltung der gleichen räumlichen Orientierung der optisch relevanten Baueinheiten zueinander bewirkt, wobei die horizontalen Verstellpunkte der optisch relevanten Baueinheiten dabei eine im Wesentlichen gegengleiche Bewegung ausführen, sodass zu jedem Zeitpunkt die erste und die zweite Horizontalachse zueinander parallel angeordnet sind, und die erste und die zweite Vertikalachse parallel zueinander angeordnet sind.

Es sei angemerkt, dass der Halter als bewegungsfest in Relation zu den möglichen Verschwenkbewegungen des ersten und zweiten Wippelements sowie der ersten und zweiten optisch relevanten Baueinheit zu verstehen ist.

Demgemäß können auch separate Halter für die Wippelemente, den ersten und den zweiten Tragerahmen vorgesehen sein, welche separaten Halter zueinander bewegungsfest ausgestaltet sind.

Es kann vorgesehen sein, dass das erste und das zweite Ende der Wippelemente jeweils über ein Koppelelement mechanisch mit den Verstellpunkten der ersten und zweiten optisch relevanten Baueinheit verbunden sind, wobei die Koppelelemente gelenkig mit den Enden der Wippelemente und gelenkig mit dem jeweiligen Verstellpunkt verbunden sind.

Es kann vorgesehen sein, dass die Koppelelemente jeweils aus einem ersten und einem zweiten Teil aufgebaut sind, welche bespielsweise über ein Schraubgewinde miteinander gekoppelt sind, sodass die Koppelelemente jeweils in ihrer Länge veränderbar sind.

Es kann vorgesehen sein, dass die erste und die zweite Drehachse orthogonal zueinander sind.

Es kann vorgesehen sein, dass der erste und der zweite Drehlagerpunkt derart in einem gemeinsamen Umlenkbereich angeordnet sind, sodass sich gesehen in einer Richtung orthogonal zu den Horizontalachsen das erste und das zweite Wippelement kreuzen.

Es kann vorgesehen sein, dass die Verstellvorrichtung ein Antriebsmittel mit einem Stellelement aufweist, welches Stellelement entlang einer linearen Hubachse bewegbar ist, wobei das Stellelement an dem ersten Wippelement angreift, um ein gleichzeitiges vertikales Verschwenken der ersten und zweiten optisch relevanten Baueinheit zu induzieren oder
wobei das Stellelement an dem zweiten Wippelement angreift, um ein gleichzeitiges horizontales Verschwenken der ersten und zweiten optisch relevanten Baueinheit zu induzieren.

Es kann vorgesehen sein, dass die Verstellvorrichtung ein Antriebsmittel mit einem Stellelement aufweist, welches Stellelement entlang einer linearen Hubachse bewegbar ist, wobei das Stellelement an der ersten optisch relevanten Baueinheit angreift, um ein gleichzeitiges horizontales Verschwenken der ersten und zweiten optisch relevanten Baueinheit zu induzieren
oder
wobei das Stellelement an der zweiten optisch relevanten Baueinheit angreift, um ein gleichzeitiges vertikales Verschwenken der ersten und zweiten optisch relevanten Baueinheit zu induzieren.

Es kann vorgesehen sein, dass die optische relevanten Baueinheiten als Lichtmodule mit separaten Tragerahmen ausgebildet sind.

Es kann vorgesehen sein, dass die Verstellpunkte der Einstelldreiecke der optischen relevanten Baueinheiten die gleichen Abstände zu ihrem jeweiligen Fixlagerpunkt aufweisen, wobei die Einstelldreiecke zueinander horizontal und vertikal gespiegelt sind.

Die Aufgabe wird ebenso gelöst durch einen Kraftfahrzeugscheinwerfer umfassend zumindest eine erfindungsgemäße Verstellvorrichtung.

Nachfolgend wird die Erfindung anhand von beispielhaften Zeichnungen näher erläutert. Hierbei zeigt

Fig. 1 eine perspektivische Ansicht eines Kraftfahrzeugscheinwerfers mit einer beispielhaften Verstelleinrichtung zum gleichzeitigen Verstellen eines ersten und zweiten Tragerahmens von Lichtmodulen, wobei die Tragrahmen jeweils ein Einstelldreieck aufweisen und die Verstelleinrichtung ein erstes und ein zweites Wippelement umfasst, welche jeweils mit den Tragerahmen gekoppelt sind,

Fig. 2 eine perspektivische Detailansicht eines Umlenkbereichs der Wippelemente,

Fig. 3 eine schematische Darstellung von Einstelldreiecken von optisch relevanten Baueinheiten, welche mittels Wippelementen gekoppelt sind,

Fig. 4 eine weitere perspektivische Detailansicht des Umlenkbereichs der Wippelemente, und

Fig. 5 eine perspektivische rückwärtige Ansicht der Verstelleinrichtung, wobei zwei Antriebsmittel mit zugehörigen Stellelementen dargestellt sind.

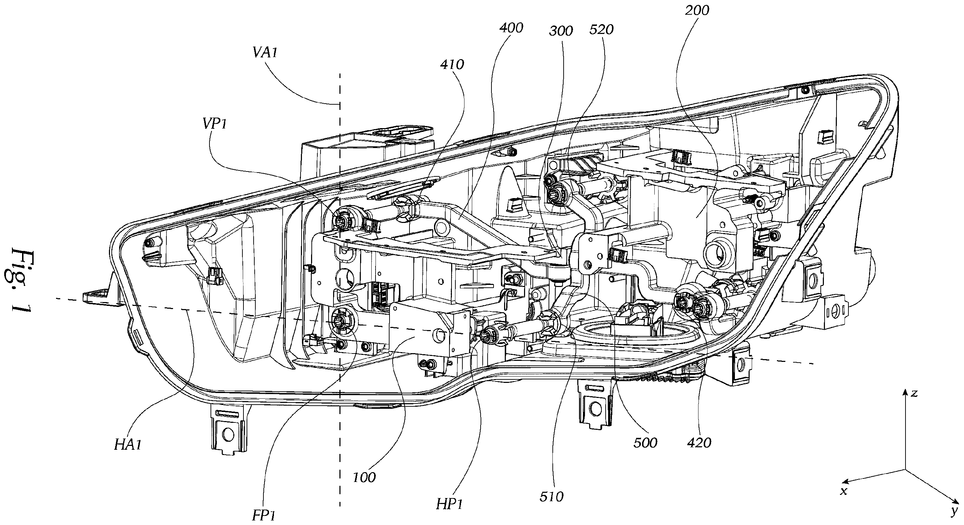

**Fig. 1** zeigt eine beispielhafte Verstellvorrichtung **10** für einen Kraftfahrzeugscheinwerfer zum gleichzeitigen Verstellen von einer ersten und einer zweiten optisch relevanten Baueinheit **100**, **200** des Kraftfahrzeugscheinwerfers, wobei im gezeigten Beispiel die optisch relevanten Baueinheiten als Tragerahmen von nicht dargestellten Lichtmodulen ausgebildet sind.

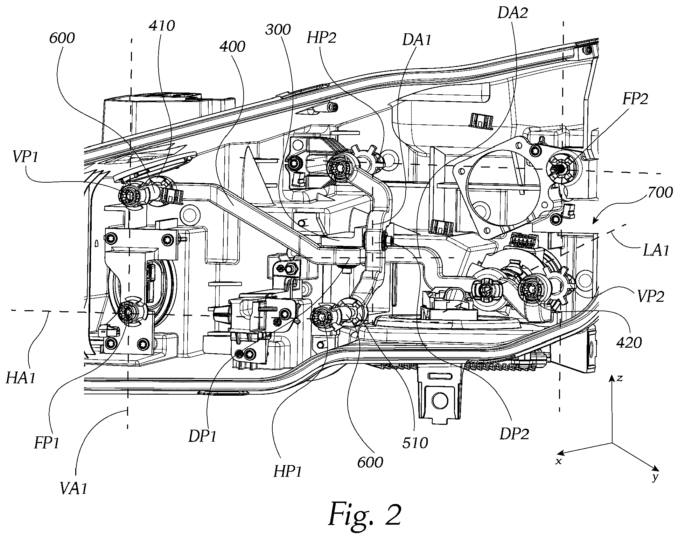

Die erste optisch relevante Baueinheit **100** ist dabei an einem ersten Fixlagerpunkt **FP1** um eine erste Horizontalachse **HA1** und eine erste Vertikalachse **VA1** verschwenkbar gelagert, wobei die zweite optisch relevante Baueinheit **200** an einem zweiten Fixlagerpunkt **FP2** um eine zweite Horizontalachse **HA2**, wie der Fig.2 zu entnehmen, und eine zweite Vertikalachse **VA2** verschwenkbar gelagert ist.

Jede optisch relevante Baueinheit **100**, **200** weist einen vertikalen und einen horizontalen Verstellpunkt **VP1**, **VP2**, **HP1**, **HP2** auf, wobei die Verstellpunkte **VP1**, **VP2**, **HP1**, **HP2** derart an den jeweiligen optisch relevanten Baueinheiten **100**, **200** angeordnet sind, dass virtuelle Verbindungslinien zwischen den Verstellpunkten **VP1**, **VP2**, **HP1**, **HP2** und dem jeweiligen Fixlagerpunkt **FP1**, **FP2** ein Einstelldreieck bilden.

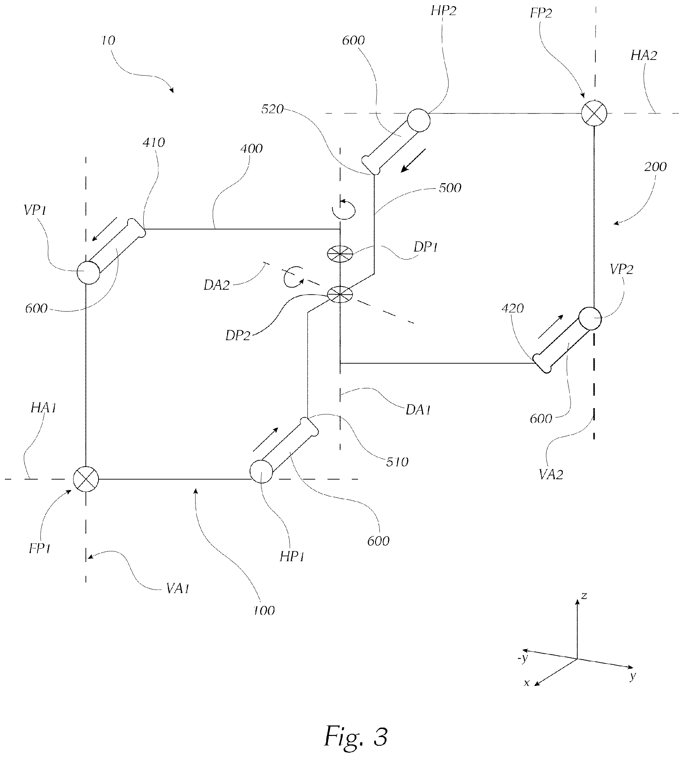

Die virtuelle Verbindungslinie zwischen dem vertikalen Verstellpunkt **VP1**, **VP2** und dem jeweiligen Fixlagerpunkt **FP1**, **FP2** bildet dabei die Vertikalachse **VA1**, **VA2**, wobei die virtuelle Verbindungslinie zwischen dem horizontalen Verstellpunkt **HP1**, **HP2** und dem jeweiligen Fixlagerpunkt **FP1**, **FP2** die Horizontalachse **HA1**, **HA2** bildet. In der schematischen Darstellung der Verstellvorrichtung **10** in **Fig. 3** sind die so gebildeten Vertikal- und Horizontalachsen besser ersichtlich.

Ausgehend von einem im ersten Fixlagerpunkt **FP1** angelegten kartesischen Koordinatensystem, ist der horizontale Verstellpunkt **HP1** der ersten optischrelevanten Baueinheit **100** derart gelegen, dass der horizontale Verstellpunkt **HP1** einen positiven y-Wert aufweist, wobei der vertikale Verstellpunkt **VP1** der ersten optisch relevanten Baueinheit **100** derart gelegen ist, dass der vertikale Verstellpunkt **VP1** einen positiven z-Wert aufweist, wie in **Fig. 3** zu erkennen ist.

Ausgehend von einem im zweiten Fixlagerpunkt **FP2** angelegten kartesischen Koordinatensystem, ist der horizontale Verstellpunkt **HP2** der zweiten optisch relevanten Baueinheit **200** derart gelegen, dass der horizontale Verstellpunkt **HP2** einen negativen y-Wert aufweist, wobei der vertikale Verstellpunkt **VP2** der zweiten optisch relevanten Baueinheit **200** derart gelegen ist, dass der vertikale Verstellpunkt **VP2** einen negativen z-Wert aufweist.

Die Verstellpunkte **VP1**, **VP2**, **HP1**, **HP2** der Einstelldreiecke der optischen relevanten Baueinheiten **100**, **200** weisen dabei die gleichen Abstände zu ihrem jeweiligen Fixlagerpunkt **FP1**, **FP2** auf, wobei die Einstelldreiecke zueinander horizontal und vertikal gespiegelt sind.

Die verschwenkbare Lagerung der ersten und zweiten optisch relevanten Baueinheit **100**, **200** ist ferner durch eine mechanische Kopplung miteinander mechanisch gekoppelt, sodass zu jedem Zeitpunkt die erste und die zweite Horizontalachse **HA1**, **HA2** zueinander parallel angeordnet sind, und die erste und die zweite Vertikalachse **VA1**, **VA2** parallel zueinander angeordnet sind.

Die Verstellvorrichtung **10** umfasst hierzu weiters einen Halter **300** zum Halten der optisch relevanten Baueinheiten **100**, **200**, welche optisch relevanten Baueinheiten **100**, **200** gelenkig mittels der jeweiligen Fixpunkte **FP1**, **FP2** an dem Halter gelagert sind.

Die mechanische Kopplung umfasst dabei, wie beispielsweise in **Fig. 2** im Detail zu sehen ist, ein erstes Wippelement **400**, welches eine Wippachse und ein erstes und zweites Ende umfasst **410**, **420**, welche gegenüberliegend zueinander entlang der Wippachse an dem ersten Wippelement **400** angeordnet sind, wobei das erste Wippelement **400** verschwenkbar an dem Halter **300** mittels einem ersten Drehlagerpunkt **DP1** gelagert ist, welcher zwischen dem ersten und zweiten Ende **410**, **420** an dem ersten Wippelement **400** angeordnet ist, sodass das erste und das zweite Ende **410**, **420** verschwenkbar um eine erste Drehachse **DA1** sind.

Die erste Drehachse **DA1** liegt in dem ersten Drehlagerpunkt **DP1**, wobei das erste und das zweite Ende **410**, **420** beim Verschwenken um die erste Drehachse **DA1** eine gegengleiche Bewegung ausführen.

Das erste Ende **410** des ersten Wippelements **400** greift an dem vertikalen Verstellpunkt **VP1** der ersten optisch relevanten Baueinheit **100** und das zweite Ende **420** an dem vertikalen Verstellpunkt **VP2** der zweiten optisch relevanten Baueinheit **200** an, sodass ein vertikales Verschwenken der ersten optisch relevanten Baueinheiten **100** um deren Horizontalachse **HA1** ein gleichzeitiges vertikales Verschwenken der zweiten optisch relevanten Baueinheit **200** um deren Horizontalachse **HA2** - und umgekehrt - unter Beibehaltung der gleichen räumlichen Orientierung der optisch relevanten Baueinheiten **100**, **200** zueinander bewirkt.

Die vertikalen Verstellpunkte **VP1**, **VP2** der optisch relevanten Baueinheiten **100**, **200** führen dabei eine im Wesentlichen gegengleiche Bewegung aus, sodass zu jedem Zeitpunkt die erste und die zweite Horizontalachse **HA1**, **HA2** zueinander parallel angeordnet sind, und die erste und die zweite Vertikalachse **VA1**, **VA2** parallel zueinander angeordnet sind.

Ferner umfasst die mechanische Kopplung ein zweites Wippelement **500**, welches eine Wippachse und ein erstes und zweites Ende **510**, **520** umfasst, welche gegenüberliegend zueinander entlang der Wippachse an dem zweiten Wippelement **500** angeordnet sind, wobei das zweite Wippelement **500** verschwenkbar an dem Halter **300** mittels einem zweiten Drehlagerpunkt **DP2** gelagert ist, welcher zwischen dem ersten und zweiten Ende **510**, **520** an dem zweiten Wippelement **500** angeordnet ist, sodass das erste und das zweite Ende **510**, **520** verschwenkbar um eine zweite Drehachse **DA2** sind.

Die zweite Drehachse **DA2** liegt in dem zweiten Drehlagerpunkt **DP2**, wobei das erste und das zweite Ende **510**, **520** beim Verschwenken um die zweite Drehachse **DA2** eine gegengleiche Bewegung ausführen, wobei die erste und die zweite Drehachse **DA1**, **DA2** orthogonal zueinander sind.

Das erste Ende **510** des zweiten Wippelements **500** greift an dem horizontalen Verstellpunkt **HP1** der ersten optisch relevanten Baueinheit **100** und das zweite Ende **520** an dem horizontalen Verstellpunkt **HP2** der zweiten optisch relevanten Baueinheit **200** an, sodass ein horizontales Verschwenken der ersten optisch relevanten Baueinheit **100** um deren Vertikalachse **VA1** ein gleichzeitiges horizontales Verschwenken der zweiten optisch relevanten Baueinheit **200** um deren Vertikalachse **VA2** - und umgekehrt - unter Beibehaltung der gleichen räumlichen Orientierung der optisch relevanten Baueinheiten **100**, **200** zueinander bewirkt.

Die horizontalen Verstellpunkte **HP1**, **HP2** der optisch relevanten Baueinheiten **100**, **200** führen dabei eine im Wesentlichen gegengleiche Bewegung aus, sodass zu jedem Zeitpunkt die erste und die zweite Horizontalachse **HA1**, **HA2** zueinander parallel angeordnet sind, und die erste und die zweite Vertikalachse **VA1**, **VA2** parallel zueinander angeordnet sind.

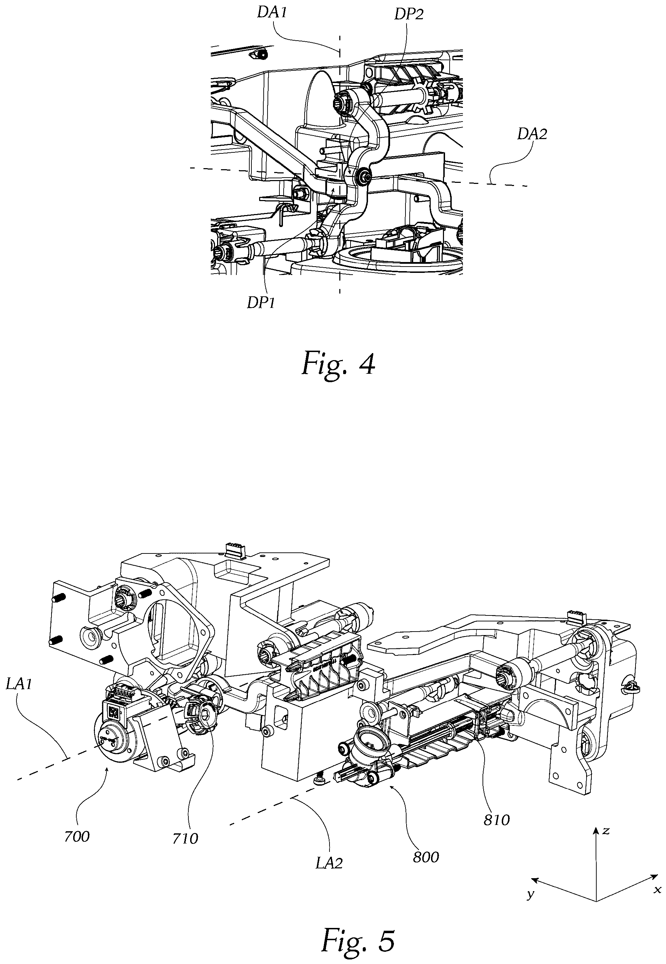

Der erste und der zweite Drehlagerpunkt **DP1**, **DP2** sind derart in einem gemeinsamen Umlenkbereich angeordnet, sodass sich - gesehen in einer Richtung orthogonal zu den Horizontalachsen **HA1**, **HA2** - das erste und das zweite Wippelement **400**, **500** kreuzen, wie in **Fig. 2** und **4** zu sehen ist.

Darüber hinaus sind das erste und das zweite Ende **410**, **510**, **420**, **520** der Wippelemente **400**, **500** jeweils über ein Koppelelement **600** mechanisch mit den Verstellpunkten **VP1**, **VP2**, **HP1**, **HP2** der ersten und zweiten optisch relevanten Baueinheit **100**, **200** verbunden, wobei die Koppelelemente **600** gelenkig mit den Enden der Wippelemente **400**, **500** und gelenkig mit dem jeweiligen Verstellpunkt **VP1**, **VP2**, **HP1**, **HP2** verbunden sind, welche Koppelelemente **600** beispielsweise in **Fig. 1**, **2** und **3** zu sehen sind.

Die Koppelelemente **600** sind jeweils aus einem ersten und einem zweiten Teil aufgebaut, welche beispielsweise über ein Schraubgewinde miteinander gekoppelt sind, sodass die Koppelelemente **600** jeweils in ihrer Länge veränderbar sind, um eine gewünschte Voreinstellung der optisch relevanten Baueinheiten **100**, **200** zu erhalten.

Ferner weist die Verstellvorrichtung **10** ein Antriebsmittel **700** mit einem Stellelement **710** auf, welches in einer rückwärtigen Ansicht der Verstellvorrichtung **10** in **Fig. 5** zu sehen ist. Das Stellelement **710** ist dabei entlang einer linearen Hubachse **LA1** bewegbar, wobei das Stellelement **710** im gezeigten Beispiel an dem ersten Wippelement **400** angreift, wie in **Fig. 2** zu sehen ist, um ein gleichzeitiges vertikales Verschwenken der ersten und zweiten optisch relevanten Baueinheit **100**, **200** zu induzieren.

Es ist auch denkbar, dass das Stellelement **710** an dem zweiten Wippelement **500** angreift, um ein gleichzeitiges horizontales Verschwenken der ersten und zweiten optisch relevanten Baueinheit **100**, **200** zu induzieren.

Zusätzlich weist die Verstellvorrichtung **10** ein Antriebsmittel **800** mit einem Stellelement **810** auf, welches ebenfalls in der rückwärtigen Ansicht der Verstellvorrichtung **10** in **Fig. 5** zu sehen ist. Das Stellelement **810** ist entlang einer linearen Hubachse **LA2** bewegbar, wobei das Stellelement **810** im gezeigten Beispiel an der ersten optisch relevanten Baueinheit **100** angreift, um ein gleichzeitiges horizontales Verschwenken der ersten und zweiten optisch relevanten Baueinheit **100**, **200** zu induzieren.

Es ist auch denkbar, dass das Stellelement **810** an der zweiten optisch relevanten Baueinheit **200** angreift, um ein gleichzeitiges vertikales Verschwenken der ersten und zweiten optisch relevanten Baueinheit **100**, **200** zu induzieren.

### LISTE DER BEZUGSZEICHEN

| | |
|---|---|
| Verstellvorrichtung... | 10 |
| Optisch relevante Baueinheit... | 100, 200 |
| Halter... | 300 |
| Erstes Wippelement... | 400 |
| Erstes Ende (1. Wippelement)... | 410 |
| Zweites Ende (1. Wippelement)... | 420 |
| Zweites Wippelement... | 500 |
| Erstes Ende (2. Wippelement)... | 510 |
| Zweites Ende (2. Wippelement)... | 520 |
| Koppelelemente... | 600 |
| Antriebsmittel... | 700, 800 |
| Stellelement... | 710, 810 |
| Lineare Hubachse... | LA1, LA2 |
| Erster Drehlagerpunkt... | DP1 |
| Zweiter Drehlagerpunkt... | DP2 |
| Erste Drehachse... | DA1 |
| Zweite Drehachse... | DA2 |
| Erster Fixlagerpunkt... | FP1 |
| Zweiter Fixlagerpunkt... | FP2 |
| Erste Horizontalachse... | HA1 |
| Zweite Horizontalachse... | HA2 |
| Erste Vertikalachse... | VA1 |
| Zweite Vertikalachse... | VA2 |
| Vertikale Verstellpunkt (1. Baueinheit)... | VP1 |
| Vertikale Verstellpunkt (2. Baueinheit)... | VP2 |
| Horiz. Verstellpunkt (1. Baueinheit)... | HP1 |
| Horiz. Verstellpunkt (2. Baueinheit)... | HP2 |

## Patentansprüche

1. Verstellvorrichtung (10) für einen Kraftfahrzeugscheinwerfer zum gleichzeitigen Verstellen von einer ersten und einer zweiten optisch relevanten Baueinheit (100, 200) des Kraftfahrzeugscheinwerfers, wobei
- die erste optisch relevante Baueinheit (100) an einem ersten Fixlagerpunkt (FP1) um eine erste Horizontalachse (HA1) und eine erste Vertikalachse (VA1) verschwenkbar gelagert ist,
- die zweite optisch relevante Baueinheit (200) an einem zweiten Fixlagerpunkt (FP2) um eine zweite Horizontalachse (HA2) und eine zweite Vertikalachse (VA2) verschwenkbar gelagert ist,
wobei jede optisch relevante Baueinheit (100, 200) einen vertikalen und einen horizontalen Verstellpunkt (VP1, VP2, HP1, HP2) aufweist, wobei die Verstellpunkte (VP1, VP2, HP1, HP2) derart an den jeweiligen optisch relevanten Baueinheiten (100, 200) angeordnet sind, dass virtuelle Verbindungslinien zwischen den Verstellpunkten (VP1, VP2, HP1, HP2) und dem jeweiligen Fixlagerpunkt (FP1, FP2) ein Einstelldreieck bilden, wobei die virtuelle Verbindungslinie zwischen dem vertikalen Verstellpunkt (VP1, VP2) und dem jeweiligen Fixlagerpunkt (FP1, FP2) die Vertikalachse (VA1, VA2) bildet, und wobei die virtuelle Verbindungslinie zwischen dem horizontalen Verstellpunkt (HP1, HP2) und dem jeweiligen Fixlagerpunkt (FP1, FP2) die Horizontalachse (HA1, HA2) bildet,
wobei ausgehend von im ersten Fixlagerpunkt (FP1) angelegten kartesischen Koordinatensystem, der horizontale Verstellpunkt (HP1) der ersten optisch relevanten Baueinheit (100) derart gelegen ist, dass der horizontale Verstellpunkt (HP1) einen positiven y-Wert aufweist, wobei der vertikale Verstellpunkt (VP1) der ersten optisch relevanten Baueinheit (100) derart gelegen ist, dass der vertikale Verstellpunkt (VP1) einen positiven z-Wert aufweist,
und wobei ausgehend von im zweiten Fixlagerpunkt (FP2) angelegten kartesischen Koordinatensystem, der horizontale Verstellpunkt (HP2) der zweiten optisch relevanten Baueinheit (200) derart gelegen ist, dass der horizontale Verstellpunkt (HP2) einen negativen y-Wert aufweist, wobei der vertikale Verstellpunkt (VP2) der zweiten optisch relevanten Baueinheit (200) derart gelegen ist, dass der vertikale Verstellpunkt (VP2) einen negativen z-Wert aufweist,
wobei die verschwenkbare Lagerung der ersten und zweiten optisch relevanten Baueinheit (100, 200) durch eine mechanische Kopplung miteinander mechanisch gekoppelt ist, sodass zu jedem Zeitpunkt die erste und die zweite Horizontalachse (HA1, HA2) zueinander parallel angeordnet sind, und die erste und die zweite Vertikalachse (VA1, VA2) parallel zueinander angeordnet sind,
wobei die Verstellvorrichtung (10) einen Halter (300) zum Halten der optisch relevanten Baueinheiten (100, 200) umfasst, welche optisch relevanten Baueinheiten (100, 200) gelenkig mittels der jeweiligen Fixpunkte (FP1, FP2) an dem Halter gelagert sind,
**dadurch gekennzeichnet, dass**
die mechanische Kopplung Folgendes umfasst:
- ein erstes Wippelement (400), welches eine Wippachse und ein erstes und zweites Ende umfasst (410, 420), welche gegenüberliegend zueinander entlang der Wippachse an dem ersten Wippelement (400) angeordnet sind, wobei das erste Wippelement (400) verschwenkbar an dem Halter (300) mittels einem ersten Drehlagerpunkt (DP1) gelagert ist, welcher zwischen dem ersten und zweiten Ende (410, 420) an dem ersten Wippelement (400) angeordnet ist, sodass das erste und das zweite Ende (410, 420) verschwenkbar um eine erste Drehachse (DA1) sind, welche erste Drehachse (DA1) in dem ersten Drehlagerpunkt (DP1) liegt, wobei das erste und das zweite Ende (410,420) beim Verschwenken um die erste Drehachse (DA1) eine gegengleiche Bewegung ausführen,
wobei das erste Ende (410) des ersten Wippelements (400) an dem vertikalen Verstellpunkt (VP1) der ersten optisch relevanten Baueinheit (100) und das zweite Ende (420) des ersten Wippelements (400) an dem vertikalen Verstellpunkt (VP2) der zweiten optisch relevanten Baueinheit (200) angreift, sodass ein vertikales Verschwenken der ersten optisch relevanten Baueinheit (100) um deren Horizontalachse (HA1) ein gleichzeitiges vertikales Verschwenken der zweiten optisch relevanten Baueinheit (200) um deren Horizontalachse (HA2) - und umgekehrt - unter Beibehaltung der gleichen räumlichen Orientierung der optisch relevanten Baueinheiten (100, 200) zueinander bewirkt, wobei die vertikalen Verstellpunkte (VP1, VP2) der optisch relevanten Baueinheiten dabei eine im Wesentlichen gegengleiche Bewegung ausführen, sodass zu jedem Zeitpunkt die erste und die zweite Horizontalachse (HA1, HA2) zueinander parallel angeordnet sind, und die erste und die zweite Vertikalachse (VA1, VA2) parallel zueinander angeordnet sind,
- ein zweites Wippelement (500), welches eine Wippachse und ein erstes und zweites Ende (510, 520) umfasst, welche gegenüberliegend zueinander entlang der Wippachse an dem zweiten Wippelement (500) angeordnet sind, wobei das erste Wippelement (500) verschwenkbar an dem Halter (300) mittels einem zweiten Drehlagerpunkt (DP2) gelagert ist, welcher zwischen dem ersten und zweiten Ende (510, 520) an dem zweiten Wippelement (500) angeordnet ist, sodass das erste und das zweite Ende (510, 520) verschwenkbar um eine zweite Drehachse (DA2) sind, welche zweite Drehachse (DA2) in dem zweiten Drehlagerpunkt (DP2) liegt, wobei das erste und das zweite Ende (510, 520) beim Verschwenken um die zweite Drehachse (DA2) eine gegengleiche Bewegung ausführen,
wobei das erste Ende (510) des zweiten Wippelements (500) an dem horizontalen Verstellpunkt (HP1) der ersten optisch relevanten Baueinheit (100) und das zweite Ende (520) des zweiten Wippelements an dem horizontalen Verstellpunkt (HP2) der zweiten optisch relevanten Baueinheit (200) angreift, sodass ein horizontales Verschwenken der ersten optisch relevanten Baueinheiten (100) um deren Vertikalachse (VA1) ein gleichzeitiges horizontales Verschwenken der zweiten optisch relevanten Baueinheit (200) um deren Vertikalachse (VA2) - und umgekehrt - unter Beibehaltung der gleichen räumlichen Orientierung der optisch relevanten Baueinheiten (100, 200) zueinander bewirkt, wobei die horizontalen Verstellpunkte (HP1, HP2) der optisch relevanten Baueinheiten (100, 200) dabei eine im Wesentlichen gegengleiche Bewegung ausführen, sodass zu jedem Zeitpunkt die erste und die zweite Horizontalachse (HA1, HA2) zueinander parallel angeordnet sind, und die erste und die zweite Vertikalachse (VA1, VA2) parallel zueinander angeordnet sind.

2. Verstellvorrichtung nach Anspruch 1, **dadurch gekennzeichnet, dass** das erste und das zweite Ende (410, 510, 420, 520) der Wippelemente (400, 500) jeweils über ein Koppelelement (600) mechanisch mit den Verstellpunkten (VP1, VP2, HP1, HP2) der ersten und zweiten optisch relevanten Baueinheit (100, 200) verbunden sind, wobei die Koppelelemente (600) gelenkig mit den Enden der Wippelemente (400, 500) und gelenkig mit dem jeweiligen Verstellpunkt (VP1, VP2, HP1, HP2) verbunden sind.

3. Verstellvorrichtung nach Anspruch 2, **dadurch gekennzeichnet, dass** die Koppelelemente (600) jeweils aus einem ersten und einem zweiten Teil aufgebaut sind, welche über ein Schraubgewinde miteinander gekoppelt sind, sodass die Koppelelemente (600) jeweils in ihrer Länge veränderbar sind.

4. Verstellvorrichtung nach einem der Ansprüche 1 bis 3, **dadurch gekennzeichnet, dass** die erste und die zweite Drehachse (DA1, DA2) orthogonal zueinander sind.

5. Verstellvorrichtung nach einem der Ansprüche 1 bis 4, **dadurch gekennzeichnet, dass** der erste und der zweite Drehlagerpunkt (DP1, DP2) derart in einem gemeinsamen Umlenkbereich angeordnet sind, sodass sich gesehen in einer Richtung orthogonal zu den Horizontalachsen (HA1, HA2) das erste und das zweite Wippelement (400, 500) kreuzen.

6. Verstellvorrichtung nach einem der Ansprüche 1 bis 5, **dadurch gekennzeichnet, dass** die Verstellvorrichtung (10) ein Antriebsmittel (700) mit einem Stellelement (710) aufweist, welches Stellelement (710) entlang einer linearen Hubachse (LA1) bewegbar ist, wobei das Stellelement (710) an dem ersten Wippelement (400) angreift, um ein gleichzeitiges vertikales Verschwenken der ersten und zweiten optisch relevanten Baueinheit (100, 200) zu induzieren.

7. Verstellvorrichtung nach einem der Ansprüche 1 bis 5, **dadurch gekennzeichnet, dass** die Verstellvorrichtung (10) ein Antriebsmittel (700) mit einem Stellelement (710) aufweist, welches Stellelement (710) entlang einer linearen Hubachse (LA1) bewegbar ist, wobei das Stellelement (710) an dem zweiten Wippelement (500) angreift, um ein gleichzeitiges horizontales Verschwenken der ersten und zweiten optisch relevanten Baueinheit (100, 200) zu induzieren.

8. Verstellvorrichtung nach einem der Ansprüche 1 bis 5, **dadurch gekennzeichnet, dass** die Verstellvorrichtung (10) ein Antriebsmittel (800) mit einem Stellelement (810) aufweist, welches Stellelement (810) entlang einer linearen Hubachse (LA2) bewegbar ist, wobei das Stellelement (810) an der ersten optisch relevanten Baueinheit (100) angreift, um ein gleichzeitiges horizontales Verschwenken der ersten und zweiten optisch relevanten Baueinheit (100, 200) zu induzieren

9. Verstellvorrichtung nach einem der Ansprüche 1 bis 5, **dadurch gekennzeichnet, dass** die Verstellvorrichtung (10) ein Antriebsmittel (800) mit einem Stellelement (810) aufweist, welches Stellelement (810) entlang einer linearen Hubachse (LA2) bewegbar ist, wobei das Stellelement (810) an der zweiten optisch relevanten Baueinheit (200) angreift, um ein gleichzeitiges vertikales Verschwenken der ersten und zweiten optisch relevanten Baueinheit (100, 200) zu induzieren.

10. Verstellvorrichtung nach einem der Ansprüche 1 bis 9, **dadurch gekennzeichnet, dass** die optisch relevanten Baueinheiten (100, 200) als Lichtmodule mit separaten Tragerahmen ausgebildet sind.

11. Verstellvorrichtung nach einem der Ansprüche 1 bis 10, **dadurch gekennzeichnet, dass** die Verstellpunkte (VP1, VP2, HP1, HP2) der Einstelldreiecke der optisch relevanten Baueinheiten (100, 200) die gleichen Abstände zu ihrem jeweiligen Fixlagerpunkt (FP1, FP2) aufweisen, wobei die Einstelldreiecke zueinander horizontal und vertikal gespiegelt sind.

12. Kraftfahrzeugscheinwerfer umfassend zumindest eine Verstellvorrichtung (10) nach einem der Ansprüche 1 bis 11.

13. Kraftfahrzeugscheinwerfer nach Anspruch 12, **dadurch gekennzeichnet, dass** der Halter (300) als Scheinwerfergehäuse des Kraftfahrzeugscheinwerfers ausgebildet ist.
